# EUROPEAN PATENT SPECIFICATION

(11) **EP 1 937 489 B1**
(45) Date of publication and mention of the grant of the patent: **14.10.2009**
(21) Application number: 06789062.4
(22) Date of filing: 31.07.2006
(51) Int. Cl.: B41M 5/46, B41M 5/337, B41J 2/44, C09D 5/32

(54) **DUAL BAND COLOR FORMING COMPOSITION**
DOPPELBANDFARBBILDUNGSZUSAMMENSETZUNG
COMPOSITION FORMANT UNE COULEUR BI-BANDE

(30) Priority: 18.10.2005 US 254110
(43) Date of publication of application: 02.07.2008
(73) Proprietor: HEWLETT-PACKARD DEVELOPMENT COMPANY, L.P., Houston, TX 77070 (US)
(72) Inventor: KASPERCHIK, Vladek, Corvallis, Oregon 97330 (US); DORSH, Cari, Corvallis, Oregon 97330 (US)
(74) Representative: Schoppe, Fritz
(86) International application number: PCT/US2006/029858
(87) International publication number: WO 2007/046925

(56) References cited:
- WO-A-20/04067289
- US-A1- 2004 146 812
- US-A1- 2005 075 248

## Description

### BACKGROUND

Compositions that produce a color change upon exposure to energy in the form of light or heat are of great interest in generating images on a variety of substrates. For example, data storage media provide a convenient way to store large amounts of data in stable and mobile formats. For example, optical discs, such as compact discs (CDs), digital video disks (DVDs), or other discs allow a user to store relatively large amounts of data on a single relatively small medium. Data on such discs often includes entertainment, such as music and/or images, as well as other types of data. In the past, consumer devices were only configured to read the data stored on optical disks, not to store additional data thereon. Consequently, any data placed on the optical disks was frequently placed thereon by way of a large commercial machine that burned the data onto the disc. In order to identify the contents of the disc, commercial labels were frequently printed onto the disc by way of screen printing or other similar methods.

Recent efforts have been directed to providing consumers with the ability to store data on optical disks. Such efforts include the use of drives configured to burn data on recordable compact discs (CD-R), rewritable compact discs (CD-RW), recordable digital video discs (DVD-R), rewritable digital video discs (DVD-RW), and combination drives containing a plurality of different writeable drives, to name a few. These drives provide a convenient way for users to record relatively large amounts of data that may then be easily transferred or used in other devices.

The optical disks used as storage mediums frequently have two sides: a data side configured to receive and store data and a label side. The label side is frequently a background on which the user hand writes information to identify the disc.

WO 2004/067289 A1 discloses a method for labeling an optical disc, comprising the steps of applying an electromagnetic radiation sensitive composition, transferring image data from a data source to an electromagnetic radiation source and introducing a color change in at least a portion of the electromagnetic radiation sensitive composition. The composition comprises a black leuco dye, an activator and an electromagnetic radiation absorber. The leuco dye is an isobenzofuranone-containing dye.

US-A1-2004/146812 and US-A1-2005/075248 disclose radiation curable coatings comprising a single antenna element suitable for absorbing radiation of a predetermined absorbance wavelength in addition to a color-former including the leuco-dye.

### SUMMARY

A radiation image-able coating includes a first phase including a radiation curable polymer matrix and an activator dissolved or otherwise soluble/uniformly disposed in the radiation curable polymer matrix, a second phase insolubly distributed in the first phase, the second phase including a color-former, and an antenna dye package distributed in at least one of the first and second phase, wherein the antenna dye package includes at least a first antenna dye having a first absorbance maximum wavelength and a second antenna dye having a second absorbance maximum wavelength, as defined in the claims.

Additionally, according to one exemplary embodiment, a method for forming a radiation image-able coating includes preparing a radiation-curable polymer matrix including an acidic activator species, forming a low-melting eutectic of a leuco-dye phase, distributing the low-melting eutectic of a leuco-dye phase in the polymer matrix, and sensitizing the radiation image-able coating with an antenna dye package, the antenna dye package including at least a first antenna dye having a first absorbance maximum wavelength and a second antenna dye having a second absorbance maximum wavelength, as defined in the claims.

### BRIEF DESCRIPTION OF THE DRAWINGS

The accompanying drawings illustrate various embodiments of the present system and method and are a part of the specification. The illustrated embodiments are merely examples of the present system and method and do not limit the scope of the disclosure.

FIG. 1 illustrates a schematic view of a media processing system according to one exemplary embodiment.

FIG. 2 is a flowchart illustrating a method of forming a composition according to one exemplary embodiment.

FIG. 3 is a flowchart illustrating a method for forming a radiation image-able composition, according to one exemplary embodiment.

FIG. 4 is a flow chart illustrating a method for forming a radiation image-able composition, according to one exemplary embodiment.

FIG. 5 is a flow chart illustrating a method for forming an image on a radiation image-able coating, according to one exemplary embodiment.

Throughout the drawings, identical reference numbers designate similar, but not necessarily identical, elements.

### DETAILED DESCRIPTION

The present exemplary systems and methods provide for the preparation of a dual band radiation image-able thermochromic coating. In particular, a radiation-curable radiation image-able coating is described herein that can be imaged with two or more different radiation generating devices emitting radiation of different wavelengths. According to one exemplary embodiment, the present dual band radiation image-able thermochromic coating has two or more antenna dyes dispersed and/or dissolved in various phases of the coating. Further details of the present coating, as well as exemplary methods for forming the coatings on a desired substrate will be described in further detail below.

As used in the present specification, and in the appended claims, the term "radiation image-able discs" is meant to be understood broadly as including, but in no way limited to, audio, video, multi-media, and/or software disks that are machine readable in a CD and/or DVD drive, or the like. Non-limiting examples of radiation image-able disc formats include, writeable, recordable, and rewriteable disks such as DVD, DVD-R, DVD-RW, DVD+R, DVD+RW, DVD-RAM, CD, CD-ROM, CD-R, CD-RW, and the like.

For purposes of the present exemplary systems and methods, the term "color" or "colored" refers to absorbance and reflectance properties that are preferably visible, including properties that result in black, white, or traditional color appearance. In other words, the terms "color" or "colored" includes black, white, and traditional colors, as well as other visual properties, e.g., pearlescence, reflectivity, translucence, transparency, etc.

In the following description, for purposes of explanation, numerous specific details are set forth in order to provide a thorough understanding of the present systems and methods for forming a dual band radiation image-able thermochromic coating. It will be apparent, however, to one skilled in the art that the present systems and methods may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

### Exemplary Structure

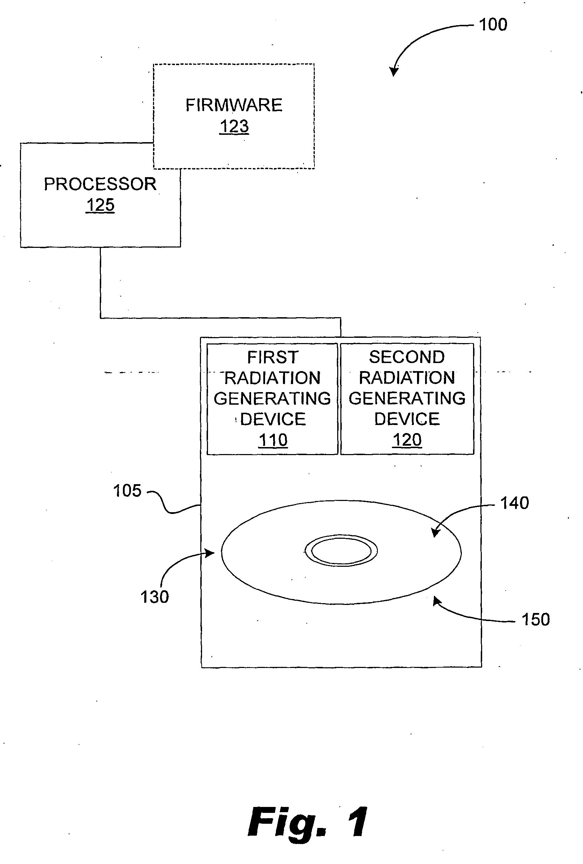

FIG. 1 illustrates a schematic view of a media processing system (100), according to one exemplary embodiment. As will be described in more detail below, the illustrated media processing system (100) allows a user, among other things, to expose a radiation image-able surface with coatings of the present exemplary compositions, register an image on the coatings, and use the imaged object for a variety of purposes. For example, according to one exemplary embodiment, a radiation image-able data storage medium (radiation image-able disc) may be inserted into the media processing system (100) to have data stored and/or a graphic image formed thereon. As used herein, for ease of explanation only, the present dual band radiation image-able thermochromic coating will be described in the context of coating an optical disk such as a compact disk (CD) or a digital video disk (DVD). However, it will be understood that the present dual band radiation image-able thermochromic coating may be applied to any number of desired substrates including, but in no way limited to, polymers, papers, metal, glass, ceramics, and the like.

As illustrated in FIG. 1, the media processing system (100) includes a housing (105) that houses a first radiation generating device (110) and a second radiation generating device (120), both of which are controllably coupled to a processor (125). The operation of both the first and second radiation generating devices (110, 120) may be controlled by the processor (125) and firmware (123) configured to selectively direct the operation of the first and second radiation generating devices. The exemplary media processing system (100) also includes hardware (not shown), such as spindles, motors, and the like, for placing a radiation image-able disc (130) in optical communication with the first and second radiation generating devices (110, 120). The operation of the hardware (not shown) may also be controlled by firmware (123) accessible by the processor (125). The above-mentioned components will be described in further detail below.

As illustrated in FIG. 1, the media processing system (100) includes a processor (125) having firmware (123) associated therewith. As shown, the processor (125) and firmware (123) are shown communicatively coupled to the first and second radiation generating devices (110, 120), according to one exemplary embodiment. Exemplary processors (125) that may be associated with the present media processing system (100) may include, without limitation, a personal computer (PC), a personal digital assistant (PDA), an MP3 player, or other such device. According to one exemplary embodiment, any suitable processor may be used, including, but in no way limited to a processor configured to reside directly on the media processing system. Additionally, as graphically shown in FIG. 1, the processor (125) may have firmware (123) such as software or other drivers associated therewith, configured to control the operation of the first and second radiation generating devices (110, 120) to selectively apply radiation to the data storage medium (130). According to one exemplary embodiment, the firmware (123) configured to control the operation of the first and second radiation generating devices (110, 120) may be stored on a data storage device (not shown) communicatively coupled to the processor (125) including, but in no way limited to, read only memory (ROM), random access memory (RAM), and the like.

As introduced, the processor (125) is configured to controllably interact with the first and second radiation generating devices (110, 120). While the first and second radiation generating devices (110, 120) may be any number of radiation generating devices, according to one exemplary embodiment, the first and second radiation generating devices (110, 120) include lasers configured for forming data on a CD and/or DVD, such as in a combo CD/DVD recording drive. More specifically, a combo CD/DVD recording drive may be configured to record on more than one type of media. For example, a DVD-R/RW (+/-) combo drive is also capable of recording CD-R/RW for example. In order to facilitate recording on more than one type of media, these combo CD/DVD recording drives include more than one laser. For example combo CD/DVD recording drives often contain 2 recording lasers: a first laser operating at approximately 780nm for CD recordings and a second laser operating at approximately 650nm for DVD recordings. Accordingly, the present media processing system (100) includes a first radiation generating device (110) configured to operate at a first wavelength and a second radiation generating device (120) configured to operate at a second wavelength. The first and second wavelengths may vary from between approximately 200 nm to approximately 1200 nm.

As mentioned previously, the present media processing system (100) includes a data storage medium in the form of a radiation imageable disk (130) disposed adjacent to the first and second radiation generating devices (110, 120). According to one exemplary embodiment, the exemplary radiation image-able disc (130) includes first (140) and second (150) opposing sides. The first side (140) has a data surface formed thereon configured to store data while the second side (150) includes a radiation image-able surface having a dual band color forming composition.

With respect to the first side (140) of the radiation image-able disk (130), the first radiation generating device (110) and/or the second radiation generating device (120) may be configured to read existing data stored on the radiation image-able disk (130) and/or to store new data on the radiation image-able disc (130), as is well known in the art. As used herein, the term "data" is meant to be understood broadly as including the non-graphic information digitally or otherwise embedded on a radiation image-able disc. According to the present exemplary embodiment, data can include, but is in no way limited to, audio information, video information, photographic information, software information, and the like. Alternatively, the term "data" may also be used herein to describe information such as instructions a computer or other processor may access to form a graphic display on a radiation image-able surface.

In contrast to the first side of the radiation image-able disk (130), the second side of the radiation image-able disk (140) includes a radiation-curable radiation image-able coating capable of being imaged with two or more different lasers emitting radiation of different wavelengths. According to one exemplary embodiment, discussed in further detail below, the second radiation-curable radiation image-able coating side of the radiation image-able disk (140) includes two separate phases: a first phase including a radiation-curable polymer matrix with an acidic activator species dissolved therein, and a second phase including a low-melting eutectic of a leuco-dye insoluble in the polymer matrix but uniformly distributed therein as a fine dispersion. As used herein, the term "insoluble" shall be interpreted broadly as including an element that is insoluble and/or has a substantially low solubility in a medium at ambient temperatures. Additionally, two or more antenna dyes are dispersed and/or dissolved in the two phases of the coating. Further details of the radiation-curable radiation image-able coating capable of being imaged with two or more different lasers emitting radiation of different wavelengths will be provided below.

### Exemplary Coating Formulation

As mentioned above, the second side of the radiation image-able disk (140) includes a number of components forming two separate phases configured to be imaged with two or more different lasers emitting radiation of different wavelengths. According to one exemplary embodiment, the two separate phases forming the present coating formulation include, but are in no way limited to, a radiation-curable polymer matrix with acidic activator species dissolved therein and a low-melting eutectic of the leuco-dye insoluble or having low solubility at ambient temperature in the matrix, but uniformly distributed therein as a fine dispersion. Additionally, the coating formulation is sensitized to a plurality of radiation generating devices by the inclusion of an antenna dye package uniformly distributed/dissolved in at least one and preferably both phase(s) of the coating. According to one exemplary embodiment, the present antenna dye package includes at least two dyes, at least one dye having an absorbance maximum corresponding to wavelength values of a first radiation generating device (110) and at least a second dye having an absorbance maximum corresponding to wavelength values of the second radiation generating device (120). Each of the present phases will be described in detail below.

As mentioned, the first phase of the dual band radiation image-able thermochromic coating includes, but is in no way limited to, a radiation-curable polymer matrix with acidic activator species dissolved therein. According to one exemplary embodiment, the radiation curable polymer may be a lacquer configured to form a continuous phase, referred to herein as a matrix phase, when exposed to light having a specific wavelength. More specifically, according to one exemplary embodiment, the radiation curable polymer may include, by way of example, UV-curable matrices such as acrylate derivatives, oligomers, and monomers, with a photo package. A photo package may include a light absorbing species, such as photoinitiators, which initiate reactions for curing of the lacquer, such as, by way of example, benzophenone derivatives. Other examples of photoinitiators for free radical polymerization monomers and pre-polymers include, but are not limited to, thioxanethone derivatives, anthraquinone derivatives, acetophenones, benzoine ethers, and the like.

According to one exemplary embodiment, the radiation-curable polymer matrix phase may be chosen such that curing is initiated by a form of radiation that does not cause a color change of the color-former present in the coating, according to the present exemplary system and method. For example, the radiation-curable polymer matrix may be chosen such that the above-mentioned photo package initiates reactions for curing of the lacquer when exposed to a light having a different wavelength than that of the leuco dyes. According to one exemplary embodiment, the photo package may initiate reactions at a significantly shorter wavelength then that of the leuco dyes, such as UV or near UV radiation. Matrices based on cationic polymerization resins may require photoinitiators based on aromatic diazonium salts, aromatic halonium salts, aromatic sulfonium salts, and metallocene compounds. Additionally, matrices based on free radical polymerization may further include free radical photoinitiators such as benzophenons, alphahydroxy ketones, isopropylthioxanthones, and the like. Consequently, an example of a suitable lacquer or matrix may include Nor-Cote CLCDG-1250A (registered trademark) (a mixture of UV curable acrylate monomers and oligomers) which contains a photoinitiator (hydroxyl ketone) and organic solvent acrylates, such as, methyl methacrylate, hexyl methacrylate, beta-phenoxy ethyl acrylate, and hexamethylene acrylate. Other suitable components for lacquers or matrices may include, but are not limited to, acrylated polyester oligomers, such as CN293 (registered trademark) and CN294 (registered trademark) as well as CN-292 (registered trademark) (low viscosity polyester acrylate oligomer), trimethylolpropane triacrylate commercially known as SR-351 (registered trademark), isodecyl acrylate commercially known as SR-395 (registered trademark), and 2(2-ethoxyethoxy)ethyl acrylate commercially known as SR-256 (registered trademark), all of which are available from Sartomer Co.

Additionally, a number of acidic developers may be dispersed/dissolved in the present radiation curable polymer matrix. According to one exemplary embodiment, the acidic developers present in the radiation curable polymer matrix may include a phenolic species that is soluble or partially soluble in the coating matrix while being configured to develop color when reacting with a leuco dye through proton transfer. Suitable developers for use with the present exemplary system and method include, but are in no way limited to, acidic phenolic compounds such as, for example, Bis-Phenol A, p-Hydroxy Benzyl Benzoate, Bisphenol S (4,4-Dihydroxydiphenyl Sulfone), 2,4-Dihydroxydiphenyl Sulfone, Bis(4-hydroxy-3-allylphenyl) sulfone (Trade name - TG-SA (registered trademark), 4-Hydroxyphenyl-4'-isopropoxyphenyl sulfone (Trade name - D8 (registered trademark)). The acidic developer may be either completely or at least partially dissolved in the UV-curable matrix.

The second phase of the present dual band radiation image-able thermochromic coating is a color-former phase including, according to one exemplary embodiment, a leuco-dye and/or leuco-dye alloy, further referred to herein as a leuco-phase. According to one exemplary embodiment, the leuco-phase is present in the form of small particles dispersed uniformly in the exemplary coating formulation. According to one exemplary embodiment, the leuco-phase includes leuco-dye or alloy of leuco-dye with a mixing aid configured to form a lower melting eutectic with the leuco-dye. Alternatively, according to one embodiment, the second phase of the present radiation curable polymer matrix may include other color forming dyes such as photochromic dyes.

According to one exemplary embodiment, the present dual band radiation image-able thermochromic coating may have any number of leuco dyes including, but in no way limited to, fluorans, phthalides, amino-triarylmethanes, aminoxanthenes, aminothioxanthenes, amino-9,10-dihydroacridines, aminophenoxazines, aminophenothiazines, aminodihydrophenazines, aminodiphenylmethanes, aminohydrocinnamic acids (cyanoethanes, leuco methines) and corresponding esters, 2(phydroxyphenyl)-4,5-diphenylimidazoles, indanones, leuco indamines, hydrozines, leuco indigoid dyes, amino-2,3-dihydroanthraquinones, tetrahalop, p'-biphenols, 2(p-hydroxyphenyl)-4,5-diphenylimidazoles, phenethylanilines, and mixtures thereof. According to one particular aspect of the present exemplary system and method, the leuco dye can be a fluoran, phthalide, aminotriarylmethane, or mixture thereof. Several nonlimiting examples of suitable fluoran based leuco dyes include, but are in no way limited to, 3-diethylamino- 6-methyl-7-anilinofluorane, 3-(N-ethyl-p-toluidino)-6-methyl-7-anilinofluorane, 3-(N-ethyl-N-isoamylamino)-6-methyl-7-anilinofluorane, 3-diethylamino-6- methyl-7-(o,p-dimethylanilino)fluorane, 3-pyrrolidino-6-methyl-7-anilinofluorane, 3-piperidino-6-methyl-7-anilinofluorane, 3-(N-cyclohexyl-Nmethylamino)-6-methyl-7-anilinofluorane, 3-diethylamino-7-(mtrifluoromethylanilino) fluorane, 3-dibutylamino-6-methyl-7-anilinofluorane, 3-diethylamino-6-chloro-7-anilinofluorane, 3-dibutylamino-7-(o-chloroanilino) fluorane, 3-diethylamino-7-(o-chloroanilino)fluorane, 3-di-n-pentylamino-6-methyl-7-anifinofluoran, 3-di-n-butylamino-6-methyl-7-anilinofluoran, 3-(n-ethyln-isopentylamino)-6-methyl-7-anilinofluoran, 3-pyrrolidino-6-methyl-7-anilinofluoran, 1(3H)-isobenzofuranone,4,5,6,7-tetrachloro-3,3-bis[2-[4-(dimethylamino)phenyl]-2-(4-methoxyphenyl)ethenyl], and mixtures thereof.

Aminotriarylmethane leuco dyes can also be used in the present invention such as tris(N,N-dimethylaminophenyl) methane (LCV); deutero-tris(N,Ndimethylaminophenyl) methane (D-LCV); tris(N,N-diethylaminophenyl) methane(LECV); deutero-tris(4-diethylaminolphenyl) methane (D-LECV); tris (N,N-di-n-propylaminophenyl) methane (LPCV); tris(N,N -dinbutylaminophenyl) methane (LBCV); bis(4-diethylamlnophenyl)-(4-diethylamino-2-methyl-phenyl) methane (LV-1); bis(4-diethylamino-2-methylphenyl)-(4-diethylamino-phenyl) methane (LV-2); tris(4-diethylamino-2-methylphenyl) methane (LV-3); deutero-bis(4-diethylaminophenyl)-(4-diethylamino-2-methylphenyl) methane (D-LV-1); deutero-bis(4-diethylamino-2-methylphenyl)(4-diethylaminophenyl) methane (D-LV-2); bis(4-diethylamino-2-methylphenyl)(3,4-dimethoxyphenyl) methane (LB-8); aminotriarylmethane leuco dyes having different alkyl substituents bonded to the amino moieties wherein each alkyl group is independently selected from C1-C4 alkyl; and aminotriaryl methane leuco dyes with any of the preceding named structures that are further substituted with one or more alkyl groups on the aryl rings wherein the latter alkyl groups are independently selected from C1-C3 alkyl.

Additional leuco dyes can also be used in connection with the present invention and are known to those skilled in the art. A more detailed discussion of appropriate leuco dyes may be found in U.S. Patent Nos. 3,658,543 and 6,251,571, each of which are hereby incorporated by reference in their entireties. Additionally examples may be found in Chemistry and Applications of Leuco Dyes, Muthyala, Ramaiha, ed.; Plenum Press, New York, London; ISBN: 0-306-45459-9.

Additionally, according to one exemplary embodiment, a number of melting aids may be included with the above-mentioned leuco dyes. As used herein, the melting aids may include, but are in no way limited to, crystalline organic solids with melting temperatures in the range of approximately 50°C to approximately 150°C, and preferably having melting temperature in the range of about 70°C to about 120°C. In addition to aiding in the dissolution of the leuco-dye and the antenna dye, the above-mentioned melting aid may also assist in reducing the melting temperature of the leuco-dye and stabilize the leuco-dye alloy in the amorphous state, or slow down the recrystallization of the leuco-dye alloy into individual components. Suitable melting aids include, but are in no way limited to, aromatic hydrocarbons (or their derivatives) that provide good solvent characteristics for leuco-dye and antenna dyes used in the present exemplary systems and methods. By way of example, suitable melting aids for use in the current exemplary systems and methods include, but are not limited to, m-terphenyl, pbenzyl biphenyl, alphanaphtol benzylether, 1,2[bis(3,4]dimethylphenyl)ethane. In some embodiments, the percent of leuco dyes or other color-former and melting aid can be adjusted to minimize the melting temperature of the color-former phase without interfering with the development properties of the leuco dye. When used, the melting aid can comprise from approximately 2 wt% to approximately 25 wt% of the color-former phase.

According to one exemplary embodiment of the present exemplary system and method, the above-mentioned leuco-phase is uniformly dispersed/distributed in the matrix phase as a separate phase. In other words, at ambient temperature, the leuco phase is practically insoluble in matrix phase. Consequently, the leuco-dye and the acidic developer component of the matrix phase are contained in the separate phases and can not react with color formation at ambient temperature. However, upon heating with laser radiation, both phases melt and mix. Once mixed together, color is developed due to a reaction between the fluoran leuco dye and the acidic developer. According to one exemplary embodiment, when the leuco dye and the acidic developer react, proton transfer from the developer opens a lactone ring of the leuco-dye, resulting in an extension of conjugate double bond system and color formation.

While the above-mentioned color formation is desired, the formation of the color is further facilitated by sensitizing the various phases of the resulting coating with a plurality of antenna dyes. According to one exemplary embodiment, the antenna dyes comprise a number of radiation absorbers configured to optimize development of the color forming composition upon exposure to radiation at a predetermined exposure time, energy level, wavelength, etc. More specifically, the radiation absorbing antenna dyes may act as an energy antenna providing energy to surrounding areas of the resulting coating upon interaction with an energy source. However, various radiation absorbing dyes have varying absorption ranges and varying absorbency maximums where the antenna dye will provide energy most efficiently from a radiation source. Generally speaking, a radiation antenna that has a maximum light absorption at or in the vicinity of a desired development wavelength may be suitable for use in the present system and method.

As a predetermined amount of energy can be provided by each of the first and second radiation generating devices (110, 120) of the media processing system (100), matching the radiation absorbing energy antenna to the radiation wavelengths and intensities of the first and second radiation generating devices can optimize the image formation system. Optimizing the system includes a process of selecting components of the color forming composition that can result in a rapidly developable composition under a fixed period of exposure to radiation at a specified power. Further, with media processing systems (100) having a plurality of radiation generating devices, optimizing the system further includes selecting radiation absorbing antenna dyes that will allow an efficient selective application of radiation to the color forming composition by a plurality of radiation generating devices.

In order to sensitize the dual band radiation image-able thermochromic coating described above to the radiation of both the first and second radiation generating devices (110, 120) present in such devices as combo optical storage recording drives, the above-mentioned exemplary coating formulation contains an antenna dye package uniformly distributed/dissolved in at least one and preferably both phase(s) of the coating. According to one exemplary embodiment, the present antenna dye package includes at least two dyes, at least one dye having an absorbance maximum corresponding to wavelength values of the first radiation generating device (110) and at least a second dye having an absorbance maximum corresponding to wavelength values of the second radiation generating device (120).

According to one exemplary embodiment, the media processing system (100) includes a DVD/CD recording drive having lasers with wavelength values of approximately 650nm and 780nm respectively. Alternatively, lasers having any wavelength value may be incorporated in the media processing system including, but in no way limited to, a blue or an indigo laser having wavelength values of approximately 300 nm to approximately 600 nm. Coatings sensitized to the DVD/CD media processing system laser combo may include an antenna dye package with at least two dyes, a first dye having an absorbance maximum at approximately 650 nm and a second dye having an absorbance maximum at approximately 780 nm. By matching the wavelength values of the first and second radiation generating devices (110, 120) and simultaneously using both the first and second radiation generating device to image the radiation image-able coating increases radiation energy density in the marking spot and enables faster and more contrast marking of the coating than it would be possible if using only one laser of the media processing system. Additionally, the use of the first and second radiation generating devices (110, 120) allows for each radiation generating device to simultaneously image different points on the coating.

As mentioned, a number of dyes having varying absorbance maximums may be used in the above-mentioned coatings to act as radiation absorbing antenna dyes. According to one exemplary embodiment, radiation absorbing antenna dyes having absorbance maximums at approximately 780nm that may be incorporated into the present antenna dye package include, but are in no way limited to, indocyanine IR-dyes such as IR780 iodide (Aldrich 42,531-1) (1) (3H-Indolium, 2-[2-[2-chloro-3-[(1,3-dihydro-3,3-dimethyl-1-propyl-2H-indol-2-ylidene)ethylidene]-1-cyclohexen-1-yl]ethenyl]-3,3-dimethyl-1-propyl, iodide (9CI)), IR783 (Aldrich 54,329-2) (2) (2-[2-[2-Chloro-3-[2-[1,3-dihydro-3,3-dimethyl-1-(4-sulfobutyl)-2*H*idol-2-ylidene]-ethylidene]-1-cyclohexen-1-yl]-ethenyl]-3,3-dimethyl-1-(4-sulfobutyl)-3*H*-indolium hydroxide, inner salt sodium salt). Additionally, phthalocyanine or naphthalocyanine IR dyes such as Silicon 2,3-naphthalocyanine bis(trihexylsiloxide) (CAS No. 92396-88-8) (Lambda max -775nm) may be used.

Exemplary radiation absorbing antenna dyes having absorbance maximums at approximately 650nm that may be incorporated into the present antenna dye package include, but are in no way limited to, dye 724 (3H-Indolium, 2-[5-(1,3-dihydro-3,3-dimethyl-1-propyl-2H-indol-2-ylidene)-1,3-pentadienyl]-3,3-dimethyl-1-propyl-, iodide) **C(lambda max = 642 nm), dye 683 (3H-Indolium, 1-butyl-2-[5-(1-butyl-1,3-dihydro-3,3-dimethyl-2H-indol-2-ylidene)-1,3-pentadienyl]-3,3-dimethyl-, perchlorate **C (lambda max = 642 nm), dyes derived from phenoxazine such as Oxazine 1 (Phenoxazin-5-ium, 3,7-bis (diethylamino)-, perchlorate) **C (lambda max = 645 nm), both of which are commercially available from "Organica Feinchemie GmbH Wollen." Appropriate antenna dyes applicable to the present exemplary system and method may also include but are not limited to phthalocyanine dyes with light absorption maximum at/or in the vicinity of 650 nm.

Radiation antennae which can be incorporated into the present antenna dye package for optimization in the blue (∼405nm) and indigo wavelengths can include, but are not limited to, aluminum quinoline complexes, porphyrins, porphins, and mixtures or derivatives thereof. Non-limiting specific examples of suitable radiation antenna can include 1-(2-chloro-5-sulfophenyl)-3-methyl-4-(4-sulfophenyl)azo-2-pyrazolin-5-one disodium salt (λmax = 400 nm); ethyl 7-diethylaminocoumarin-3-carboxylate (λmax = 418 nm); 3,3'-diethylthlacyanine ethylsulfate (λmax = 424 nm); 3-allyl-5-(3-ethyl-4-methyl-2-thiazolinylidene) rhodanine (λmax = 430 nm) (each available from Organica Feinchemie GmbH Wolfen), and mixtures thereof.

Non-limiting specific examples of suitable aluminum quinoline complexes can include tris(8-hydroxyquinolinato)aluminum (CAS 2085-33-8), and derivatives such as tris(5-cholor-8-hydroxyquinolinato)aluminum (CAS 4154-66-1), 2-(4-(1-methyl-ethyl)-phenyl)-6-phenyl-4H-thiopyran-4-ylidene)-propanedinitril-1,1-dioxide (CAS 174493-15-3), 4,4'-[1,4-phenylenebis(1,3,4-oxadiazole-5,2-diyl)]bis N,N-diphenyl benzeneamine (CAS 184101-38-0), bis-tetraethylammonium-bis(1,2-dicyano-dithiolto)-zinc(II) (CAS 21312-70-9), 2-(4,5-dihydronaphtho[1,2-d]-1,3-dithiol-2-ylidene)-4,5-dihydro-naphtho[1,2-d]1,3-dithiole, all available from Syntec GmbH.

Non-limiting examples of specific porphyrin and porphyrin derivatives can include etioporphyrin 1 (CAS 448-71-5), deuteroporphyrin IX 2,4 bis ethylene glycol (D630-9) available from Frontier Scientific, and octaethyl porphrin (CAS 2683-82-1), azo dyes such as Mordant Orange registered trademark (CAS 2243-76-7), Merthyl Yellow registered trademark (CAS 60-11-7), 4-phenylazoaniline (CAS 60-09-3), Alcian Yellow registered trademark (CAS 61968-76-1), available from Aldrich chemical company, and mixtures thereof. Exemplary methods of forming the above-mentioned coating, as well as methods for forming images on the coating are described in further detail below.

### Exemplary Coating Forming Method

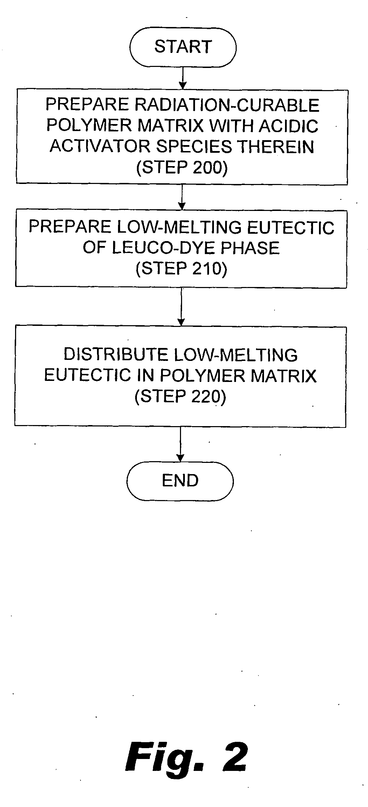

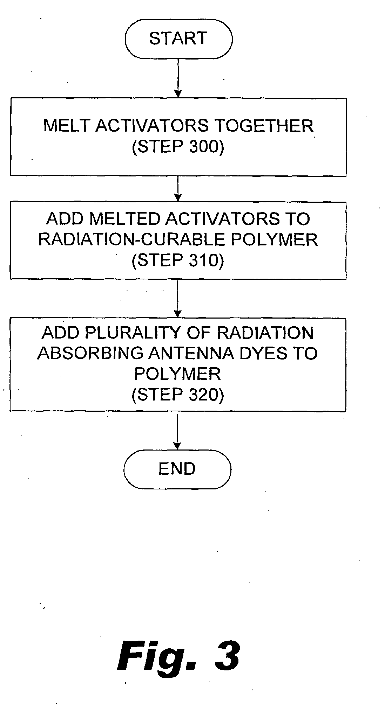

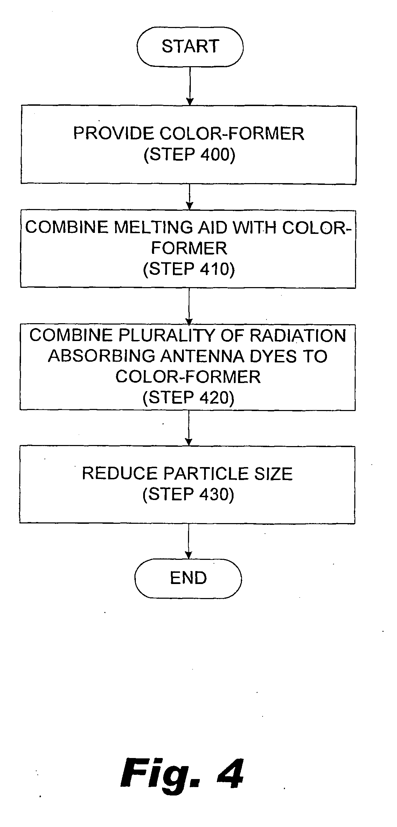

FIG. 2 is a flowchart illustrating a method of forming the present dual band radiation image-able thermochromic coating, according to one exemplary embodiment. In general, a method of forming the image-able thermochromic coating includes preparing the radiation-curable polymer matrix with an acidic activator species dissolved therein (step 200), preparing a low-melting eutectic of a leuco-dye (step 210), and evenly distributing the low-melting eutectic of a leuco-dye in the radiation curable polymer matrix (step 220). Further details of the exemplary coating forming method will now be described in further detail below with reference to FIGS. 3 and 4.

As mentioned with reference to FIG. 2, a first step of the present exemplary coating formation method includes preparing the radiation-curable polymer matrix with an acidic activator species therein (step 200). FIG. 3 further illustrates an exemplary method for preparing the radiation-curable polymer matrix, according to one exemplary embodiment. As illustrated in FIG. 3, radiation-curable polymer matrix may be prepared by firs melting the acidic, proton-donating activator species together (step 300). In some embodiments, multiple activators can be used, e.g., multiple activator systems having coequal performance values to systems having a primary activator and secondary activator(s).

Once the desired activators have been melted together (step 300), the melted activators are added to the radiation-curable polymer (Step 310). According to one exemplary embodiment, the proton-donating activator species are dissolved into the radiation-curable polymer. Dissolution of the proton-donating activator species may be facilitated by the introduction of agitation into the radiation-curable polymer. Dissolution of the proton-donating activator species in the radiation-curable polymer (step 310) will provide for a substantially even distribution of the activators throughout the polymer.

Once the desired activators have been dissolved in the radiation curable polymer (step 310), a plurality of radiation absorbing antenna dyes are added to the radiation-curable polymer (step 320). According to one exemplary embodiment, a plurality of radiation absorbing antenna dyes having absorbance maximums associated with the wavelengths of a first and second radiation generating device (110, 120; FIG. 1) are dissolved into the polymer to provide even distribution thereof.

Once the radiation-curable polymer matrix is formed (step 200; FIG. 2), a low-melting eutectic of the leuco dye phase is formed (step 210; FIG. 2). According to one exemplary embodiment illustrated in FIG. 4, the leuco dye phase is formed by first providing the color-former (step 400). As mentioned previously, the color-former may include, but is in no way limited to, leuco-dye and/or leco-dye alloy. As used herein, the term "color-former" refers to any composition that changes color upon application of energy. Color-formers may include, but are in no way limited to, leuco dyes, photochromic dyes, or the like. For example, the color-former may include leuco dyes, such as fluoran, isobenzofuran, and phthalide-type leuco dyes. The term "color-former" does not infer that color is generated from scratch, as it includes materials that can change in color, as well as materials that can become colored from a colorless or more transparent state or a different color. The resulting molten mixture may be referred to as a molten color-former phase. Additionally, according to one exemplary embodiment, a melting aid may be combined with the above-mentioned color-former (step 410). The melting aid may be a crystalline organic solid melted with the color-former, according to one exemplary embodiment. Melting aids are typically crystalline organic solids that can be melted and mixed with a particular color-former. For example, most color-formers are also available as a solid particulate that is soluble in standard liquid solvents. Thus, the color-former and melting aid can be mixed and heated to form a molten mixture. Upon cooling, a color-former phase of color-former and melting aid is formed that can then be ground into a powder.

When the color-former and the melting aid are combined (step 410), a plurality of radiation absorbing dyes may also be mixed with the color-former (step 420), according to one exemplary embodiment. As mentioned previously, the radiation absorbing dyes that are mixed with the color-former may be selected based on the wavelength or range of wavelengths produced by a device having a first and a second radiation generating device. While the present exemplary method includes a plurality of radiation absorbing dyes in each of the two phases, it will be appreciated that the radiation absorbing antenna dyes can be present in either or both of the various phases.

Once the above-mentioned components are melted, the molten low-melting eutectic of the leuco dye phase is allowed to cool and the particle size of the low-melting eutectic of the leuco dye phase is reduced (step 430). The particle size of the low-melting eutectic of the leuco dye phase may be reduced by any number of known methods including, but in no way limited to, milling and/or grinding. While the resulting particles may assume any size, according to one exemplary embodiment, the low-melting eutectic of the leuco dye phase is reduced to a size of between approximately 3.0 µm and 0.2 µm.

Returning again to the method illustrated in FIG. 2, once both the radiation-curable polymer matrix and the low-melting eutectic of the leuco-dye phase are formed, the low melting eutectic is distributed in the polymer matrix (step 220). According to one exemplary embodiment, the low-melting eutectic of the leuco-dye phase may be distributed in the polymer with the aid of continuous agitation during introduction of the low melting eutectic in the polymer matrix.

Once the dual band radiation image-able thermochromic coating is formed as described above, it may be applied to any number of desired substrates. According to one exemplary embodiment, the dual band radiation image-able thermochromic coating may be applied to a desired substrate using any number of known coating systems and methods including, but in no way limited to, doctor blade coating, gravure coating, reverse roll coating, meyer rod coating, extrusion coating, curtain coating, air knife coating, and the like.

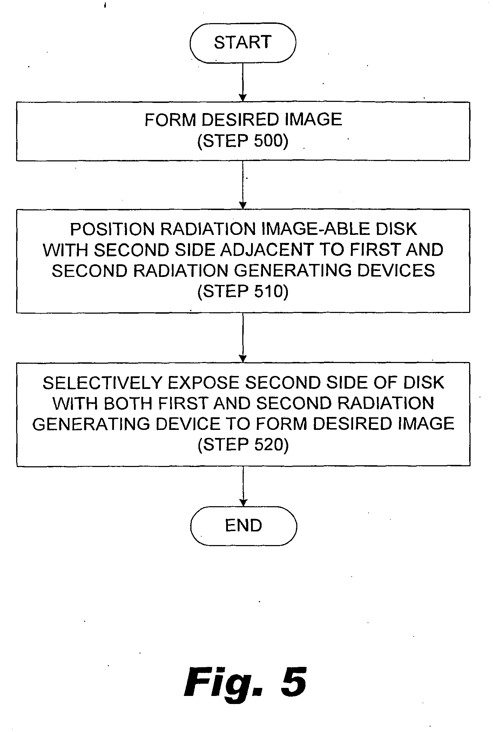

Once the above-mentioned coating is formed on the radiation image-able disk (130; FIG. 1), data may be formed on the data surface of the first side (140), and/or a desired image may be formed via selective radiation exposure on the second side (150). FIG. 5 illustrates one exemplary method for forming a desired image on the second side (150) of the radiation image-able disk (130), according to one exemplary embodiment. As illustrated in FIG. 5, the image formation method begins by first forming the desired image (step 500). According to one exemplary embodiment, forming the desired image may include forming a graphical representation of the desired image using any number of user interfaces and converting the graphical representation into a number of machine controllable commands using the firmware (123; FIG. 1) and/or the processor (125; FIG. 1) of the media processing system (step 500).

Continuing with FIG. 5, the radiation image-able disk may then be placed adjacent to the first and second radiation generating devices (110, 120; FIG. 1) with the radiation image-able coating in optical communication with the radiation generating devices (step 510). With the radiation image-able coating in optical communication with the radiation generating devices (step 510), the radiation image-able coating may then be selectively exposed to both the first and second radiation generating device to form the desired image (step 520). According to this exemplary embodiment, the formation of the desired image may be accelerated compared to traditional image formation methods because both the first and second radiation generating devices (110, 120; FIG. 1) may simultaneously form the desired image on the image-able coating due to the plurality of radiation absorbing antenna dyes. The details of the simultaneous exposure may vary according to any number of embodiments. More specifically, the first and second radiation generating devices (110, 120; FIG. 1) may simultaneously expose the same region of the image-able coating, they may consecutively be exposed to the same region of the image-able coating, and/or the first and second radiation generating devices may expose separate portions of the image-able coating to form the desired image.

In conclusion, the present exemplary systems and methods provide for the preparation of a dual band radiation image-able thermochromic coating. In particular, the present exemplary radiation-curable radiation image-able coating has dual band absorption properties. Due to the above-mentioned dual band absorption characteristics, the present exemplary coating may be imaged by a plurality of lasers or other radiation emitting devices in a combo drive at the same time. Utilization of both lasers in a combo drive during labeling allows for the achievement of higher energy density in an imaging location and for the writing of labels faster and with greater contrast.

## Claims

1. A radiation image-able coating, comprising:
a first phase including a radiation curable polymer matrix and an activator disposed in said radiation curable polymer matrix;
a second phase insolubly distributed in said first phase, said second phase including a color-former; and
an antenna dye package distributed in at least one of said first and second phase, wherein said antenna dye package includes at least a first antenna dye having a first absorbance maximum wavelength and a second antenna dye having a second absorbance maximum wavelength said first and second wavelengths being different, and wherein the first and second antenna dyes are different from the color-former.

2. The coating of claim 1 , wherein said antenna dye package is distributed in both said first phase and said second phase.

3. The coating of claim 1 , wherein said color-former comprises a low-melting eutectic of one of a leuco-dye or a leuco-dye alloy.

4. The coating of claim 1 , wherein said first absorbance maximum wavelength comprises one of 780 nm, 650 nm, or 405 nm.

5. The coating of claim 1 , wherein said activator comprises an acidic activator species dissolved in said first phase.

6. The coating of claim 1 , wherein said second phase comprises a dispersion within said first phase.

7. The coating of claim 1 , wherein said second phase further comprises a melting aid configured to decrease the melting temperature of said eutectic.

8. A method of forming a radiation image-able coating comprising:
preparing a radiation-curable polymer matrix including an acidic activator species;
forming a low-melting eutectic of a leuco-dye phase;
distributing said low-melting eutectic of a leuco-dye phase in said polymer matrix; and
sensitizing said radiation image-able coating with an antenna dye package, wherein said antenna dye package includes at least a first antenna dye having a first absorbance maximum wavelength and a second antenna dye having a second absorbance maximum wavelength said first and second wavelength being different, and wherein the first and second antenna dyes are different from the color-former.

9. A method of forming an image on a substrate comprising:
forming a radiation image-able coating on a desired substrate, wherein said radiation image-able coating includes a first phase including a radiation curable polymer matrix and an activator disposed in said radiation curable polymer matrix, a second phase insolubly distributed in said first phase, said second phase including a color-former, and an antenna dye package distributed in at least one of said first and second phase, wherein said antenna dye package includes at least a first antenna dye having a first absorbance maximum wavelength and a second antenna dye having a second absorbance maximum wavelength said first and second wavelengths being different, and wherein the first and second antenna dyes are different from the color-former; and
selectively exposing said radiation image-able coating to a first and a second laser, wherein said first laser has a wavelength associated with said first absorbance maximum wavelength, and wherein said second laser has a wavelength associated with said second absorbance maximum wavelength.

10. The method of claim 9, wherein said antenna dye package is distributed in both said first phase and said second phase.

11. The method of claim 9, wherein said first laser has a wavelength of one of 780 nm, 650 nm, or 405 nm.

12. The method of claim 9, further comprising simultaneously exposing said radiation image-able coating to said first laser and said second laser.

13. The method of claim 9, wherein said antenna dye package is distributed in both said first phase and said second phase.

14. The method of claim 9, wherein said color-former comprises a low-melting eutectic of one of a leuco-dye or a leuco-dye alloy.

15. A system for forming an image on a substrate, comprising:
a first radiation generating device (110) configured to generate radiation having a first wavelength;
a second radiation generating device (120) configured to generate radiation having a second wavelength, said first and second wavelength being different;
a substrate disposed adjacent to both said first radiation generating device (110) and said second radiation generating device (120); and
a radiation image-able coating disposed on said substrate, wherein said radiation image-able coating includes a first phase including a radiation curable polymer matrix and an activator disposed in said radiation curable polymer matrix, a second phase insolubly distributed in said first phase, said second phase including a color-former, and an antenna dye package distributed in at least one of said first and second phase, wherein said antenna dye package includes at least a first antenna dye having a first absorbance maximum wavelength associated with said first radiation wavelength and a second antenna dye having a second absorbance maximum wavelength associated with said second radiation wavelength, wherein the first and second antenna dyes are different from the color-former.

16. A radiation imageable disk including the coating of any of claims 1 to 7.

## Patentansprüche

1. Eine mittels Strahlung abbildbare Beschichtung, die folgende Merkmale aufweist:
eine erste Phase, die eine mittels Strahlung härtbare Polymermatrix und einen in der mittels Strahlung härtbaren Polymermatrix angeordneten Aktivator umfasst;
eine zweite Phase, die unlöslich in der ersten Phase verteilt ist, wobei die zweite Phase einen Farbbildner umfasst; und
ein Antennenfarbstoffpaket, das in zumindest entweder der ersten und/oder der zweiten Phase verteilt ist, wobei das Antennenfarbstoffpaket zumindest einen ersten Antennenfarbstoff, der eine erste Absorbanzmaximumswellenlänge aufweist, und einen zweiten Antennenfarbstoff, der eine zweite Absorbanzmaximumswellenlänge aufweist, wobei sich die erste und die zweite Wellenlänge voneinander unterscheiden, umfasst, wobei sich der erste und der zweite Antennenfarbstoff von dem Farbbildner unterscheiden.

2. Die Beschichtung gemäß Anspruch 1, bei der das Antennenfarbstoffpaket sowohl in der ersten Phase als auch in der zweiten Phase verteilt ist.

3. Die Beschichtung gemäß Anspruch 1, bei der der Farbbildner ein niedrigschmelzendes Eutektikum eines Leukofarbstoffs oder einer Leukofarbstofflegierung umfasst.

4. Die Beschichtung gemäß Anspruch 1, bei der die erste Absorbanzmaximumswellenlänge entweder 780 nm, 650 nm oder 405 nm umfasst.

5. Die Beschichtung gemäß Anspruch 1, bei der der Aktivator eine in der ersten Phase gelöste säurehaltige Aktivatorspezies umfasst.

6. Die Beschichtung gemäß Anspruch 1, bei der die zweite Phase eine Dispersion in der ersten Phase umfasst.

7. Die Beschichtung gemäß Anspruch 1, bei der die zweite Phase ferner eine Schmelzhilfe umfasst, die dahin gehend konfiguriert ist, die Schmelztemperatur des Eutektikums zu verringern.

8. Ein Verfahren zum Bilden einer mittels Strahlung abbildbaren Beschichtung, das folgende Schritte umfasst:
Herstellen einer mittels Strahlung härtbaren Polymermatrix, die eine säurehaltige Aktivatorspezies umfasst;
Bilden eines niedrigschmelzenden Eutektikums einer Leukofarbstoffphase;
Verteilen des niedrigschmelzenden Eutektikums einer Leukofarbstoffphase in der Polymermatrix; und
Sensibilisieren der mittels Strahlung abbildbaren Beschichtung mit einem Antennenfarbstoffpaket, wobei das Antennenfarbstoffpaket zumindest einen ersten Antennenfarbstoff, der eine erste Absorbanzmaximumswellenlänge aufweist, und einen zweiten Antennenfarbstoff, der eine zweite Absorbanzmaximumswellenlänge aufweist, wobei sich die erste und die zweite Wellenlänge voneinander unterscheiden, umfasst, wobei sich der erste und der zweite Antennenfarbstoff von dem Farbbildner unterscheiden.

9. Ein Verfahren zum Erzeugen eines Bildes auf einem Substrat, das folgende Schritte umfasst:
Bilden einer mittels Strahlung abbildbaren Beschichtung auf einem gewünschten Substrat, wobei die mittels Strahlung abbildbare Beschichtung eine erste Phase, die eine mittels Strahlung härtbare Polymermatrix und einen in der mittels Strahlung härtbaren Polymermatrix angeordneten Aktivator umfasst, eine zweite Phase, die unlöslich in der ersten Phase verteilt ist, wobei die zweite Phase einen Farbbildner umfasst, und ein Antennenfarbstoffpaket, das in zumindest entweder der ersten und/oder der zweiten Phase verteilt ist, wobei das Antennenfarbstoffpaket zumindest einen ersten Antennenfarbstoff, der eine erste Absorbanzmaximumswellenlänge aufweist, und einen zweiten Antennenlarbstoff, der eine zweite Absorbanzmaximumswellenlänge aufweist, wobei sich die erste und die zweite Wellenlänge voneinander unterscheiden, umfasst, wobei sich der erste und der zweite Antennenfarbstoff von dem Farbbildner unterscheiden, umfasst: und
selektives Belichten der mittels Strahlung abbildbaren Beschichtung mit einem ersten und einem zweiten Laser, wobei der erste Laser eine der ersten Absorbanzmaximumswellenlänge zugeordnete Wellenlänge aufweist und wobei der zweite Laser eine der zweiten Absorbanzmaximumswellenlänge zugeordnete Wellenlänge aufweist.

10. Das Verfahren gemäß Anspruch 9, bei dem das Antennenfarbstoffpaket sowohl in der ersten Phase als auch in der zweite Phase verteilt ist.

11. Das Verfahren gemäß Anspruch 9, bei dem der erste Laser eine Wellenlänge von entweder 780 nm, 650 nm oder 405 nm aufweist.

12. Das Verfahren gemäß Anspruch 9, das ferner ein gleichzeitiges Belichten der mittels Strahlung abbildbaren Beschichtung mit dem ersten Laser und dem zweiten Laser umfasst.

13. Das Verfahren gemäß Anspruch 9, bei dem das Antennenfarbstoffpaket sowohl in der ersten Phase als auch in der zweiten Phase verteilt ist.

14. Das Verfahren gemäß Anspruch 9. bei dem der Farbbildner ein niedrigschmelzendes Eutektikum entweder eines Leukofarbstoffs oder einer Leukofarbstofflegierung umfasst.

15. Ein System zum Erzeugen eines Bildes auf einem Substrat, das folgende Merkmale umfasst:
eine erste Strahlungserzeugungsvorrichtung (110), die dahin gehend konfiguriert ist. Strahlung zu erzeugen, die eine erste Wellenlänge aufweist;
eine zweite Strahlungserzeugungsvorrichtung (120), die dahin gehend konfiguriert ist. Strahlung zu erzeugen, die eine zweite Wellenlänge aufweist, wobei sich die erste und die zweite Wellenlänge voneinander unterscheiden:
ein Substrat, das sowohl neben der ersten Strahlungserzeugungsvorrichtung (110) als auch neben der zweiten Strahlungserzeugungsvorrichtung (120) angeordnet ist; und
eine auf dem Substrat angeordnete mittels Strahlung abbildbare Beschichtung, wobei die mittels Strahlung abbildbare Beschichtung eine erste Phase, die eine mittels Strahlung härtbare Polymermatrix und einen in der mittels Strahlung härtbaren Polymermatrix angeordneten Aktivator umfasst, eine zweite Phase, die unlöslich in der ersten Phase verteilt ist, wobei die zweite Phase einen Farbbildner umfasst, und ein Antennenfarbstoffpaket, das in zumindest entweder der ersten und/oder der zweiten Phase verteilt ist, wobei das Antennenfarbstoffpaket zumindest einen ersten Antennenfarbstoff, der eine der ersten Strahlungswellenlänge zugeordnete erste Absorbanzmaximumswellenlänge aufweist, und einen zweiten Antennenfarbstoff, der eine der zweiten Strahlungswellenlänge zugeordnete zweite Absorbanzmaximumswellenlänge aufweist, wobei sich der erste und der zweite Antennenfarbstoff von dem Farbbildner unterscheiden, umfasst.

16. Eine mittels Strahlung abbildbare Platte, die die Beschichtung gemäß einem der Ansprüche 1 bis 7 umfasst.

## Revendications

1. Revêtement pouvant être imagé par rayonnement, comprenant :
■ une première phase incluant une matrice de polymère vulcanisable par rayonnement et un activateur disposé dans ladite matrice de polymère vulcanisable par rayonnement ;
■ une seconde phase distribuée de façon insoluble dans ladite première phase, ladite seconde phase incluant un chromogène ; et
■ un bloc de colorant d'antenne distribué dans au moins l'une parmi ladite première et ladite seconde phase, où ledit bloc de colorant d'antenne inclut au moins un premier colorant d'antenne ayant une première longueur d'onde d'absorbance maximale et un second colorant d'antenne ayant une seconde longueur d'onde d'absorbance maximale, lesdites première et seconde longueurs d'onde étant différentes et où les premier et second colorants d'antenne sont différents du chromogène.

2. Revêtement selon la revendication 1, dans lequel ledit bloc de colorant d'antenne est distribué à la fois dans ladite première phase et dans ladite seconde phase.

3. Revêtement selon la revendication 1, dans lequel ledit chromogène comprend un eutectique à bas point de fusion d'un élément parmi un leucocolorant ou un alliage de leucocolorant.

4. Revêtement selon la revendication 1, dans lequel ladite première longueur d'onde d'absorbance maximale comprend une longueur d'onde parmi 780 nm, 650 nm ou 405 nm.

5. Revêtement selon la revendication 1, dans lequel ledit activateur comprend une espèce d'activateur acide dissoute dans ladite première phase.

6. Revêtement selon la revendication 1, dans lequel ladite seconde phase comprend une dispersion au sein de ladite première phase.

7. Revêtement selon la revendication 1, dans lequel ladite seconde phase comprend en outre une aide à la fusion configurée pour diminuer la température de fusion dudit eutectique.

8. Procédé de formation d'un revêtement pouvant être imagé par rayonnement comprenant les étapes consistant à :
■ préparer une matrice de polymère vulcanisable par rayonnement incluant une espèce d'activateur acide ;
■ former un eutectique de bas point de fusion d'une phase de leucocolorant ;
■ distribuer ledit eutectique de bas point de fusion d'une phase de leucolorant dans ladite matrice de polymère ; et
■ sensibiliser ledit revêtement pouvant être imagé par rayonnement avec un bloc de colorant d'antenne, où ledit bloc de colorant d'antenne inclut au moins un premier colorant d'antenne ayant une première longueur d'onde d'absorbance maximale et un second colorant d'antenne ayant une seconde longueur d'onde d'absorbance maximale, lesdites première et seconde longueurs d'onde étant différentes, et où les premier et second colorants d'antenne sont différents du chromogène.

9. Procédé de formation d'une image sur un substrat comprenant les étapes consistant à :
■ former un revêtement pouvant être imagé par rayonnement sur un substrat souhaité, où ledit revêtement pouvant être imagé par rayonnement inclut une première phase incluant une matrice de polymère vulcanisable par rayonnement et un activateur disposé dans ladite matrice de polymère vulcanisable par rayonnement, une seconde phase distribuée de façon insoluble dans ladite première phase, ladite seconde phase incluant un chromogène, et un bloc de colorant d'antenne distribué dans au moins l'une desdites première et seconde phases, où ledit bloc de colorant d'antenne inclut au moins un premier colorant d'antenne ayant une première longueur d'onde d'absorbance maximale et un second colorant d'antenne ayant une seconde longueur d'onde d'absorbance maximale, lesdites première et seconde longueurs d'onde étant différentes, et où les premier et second colorants d'antenne sont différents du chromogène ; et
■ exposer sélectivement ledit revêtement pouvant être imagé par rayonnement à un premier et un second laser où ledit premier laser a une longueur d'onde associée à ladite première longueur d'onde d'absorbance maximale et où ledit second laser a une longueur d'onde associée à ladite seconde longueur d'onde d'absorbance maximale.

10. Procédé selon la revendication 9, dans lequel ledit bloc de colorant d'antenne est distribué à la fois dans ladite première phase et dans ladite seconde phase.

11. Procédé selon la revendication 9, dans lequel ledit premier laser a une longueur d'onde choisie parmi 780 nm, 650 nm ou 405 nm.

12. Procédé selon la revendication 9, comprenant en outre une exposition simultanée dudit revêtement pouvant être imagé par rayonnement audit premier laser et audit second laser.

13. Procédé selon la revendication 9, dans lequel ledit bloc de colorant d'antenne est distribué à la fois dans ladite première phase et dans ladite seconde phase.

14. Procédé selon la revendication 9, dans lequel ledit chromogène comprend un eutectique à bas point de fusion d'un élément parmi un leucocolorant ou un alliage de leucocolorant.

15. Système de formation d'une image sur un substrat, comprenant :
■ un premier dispositif générateur de rayonnement (110) configuré pour générer un rayonnement ayant une première longueur d'onde ;
■ un second dispositif générateur de rayonnement (120) configuré pour générer un rayonnement ayant une seconde longueur d'onde, lesdites première et seconde longueurs d'onde étant différentes ;
■ un substrat disposé de façon adjacente à la fois audit premier dispositif générateur de rayonnement (110) et audit second dispositif générateur de rayonnement (120) ; et
■ un revêtement pouvant être imagé par rayonnement disposé sur ledit substrat, où ledit revêtement pouvant être imagé par rayonnement inclut une première phase incluant une matrice de polymère vulcanisable par rayonnement et un activateur disposé dans ladite matrice de polymère vulcanisable par rayonnement, une seconde phase distribuée de façon insoluble dans ladite première phase, ladite seconde phase incluant un chromogène, et un bloc de colorant d'antenne distribué dans au moins l'une desdites première et seconde phases, où ledit bloc de colorant d'antenne inclut au moins un premier colorant d'antenne ayant une première longueur d'onde d'absorbance maximale associée à ladite première longueur d'onde de rayonnement et un second colorant d'antenne ayant une seconde longueur d'onde d'absorbance maximale associée à ladite seconde longueur d'onde de rayonnement, où les premier et second colorants d'antenne sont différents du chromogène.

16. Disque pouvant être imagé par rayonnement incluant le revêtement selon l'une quelconque des revendications 1 à 7.
